# EUROPEAN PATENT APPLICATION

(11) **EP 3 614 023 A1**
(43) Date of publication of application: **26.02.2020**
(21) Application number: 19192748.2
(22) Date of filing: 21.08.2019
(51) Int. Cl.: F16H 57/05, F16N 7/12, F16N 7/36, F16H 57/04

(54) **AN ASSEMBLY FOR LUBRICATION OF FORESTRY WINCH CHAINS AND A METHOD FOR LUBRICATION OF FORESTRY WINCH CHAINS**

(30) Priority: 24.08.2018 SI 201800189
(71) Applicant: Pisek - Vitli Krpan, d.o.o., 3240 Smarje pri Jelsah (SI)
(72) Inventor: Pisek, Franc, 3240 Smarje pri Jelsah (SI)
(74) Representative: Patentni Biro AF d.o.o.

(57) **Abstract**

The present invention belongs to the field of forestry and working machines, which use a chain drive to transfer torque, more precisely to the field of systems and devices for maintenance and lubrication of the chain drive system, preferably in for forestry winches.

The assembly for lubrication of chains for any working machine driven by an electric or a hydraulic drive comprises at least one supply channel on the drive axle of a sprocket gear, so that the supply channel distributes a lubricant from a reservoir via at least one transverse channel to the circumference of at least one sprocket gear on which a chain is run, wherein the lubricant can spread along said channel.

## Description

### Field of the invention

The present invention belongs to the field of forestry and working machines, which use a chain drive to transfer torque, more precisely to the field of systems and devices for maintenance and lubrication of the chain drive system, preferably in forestry winches.

### The technical problem

The technical problem, which is solved by the present invention, is designing a solution of lubrication of chains, especially in forestry winches as well as in other forestry and working machines. Namely, during operation the chain runs on the circumference of a sprocket gear, so that chain links can mesh with the sprocket gear teeth, wherein certain elements of the chain such as lamellae, bush, chain cylinder, move. The chains enabling transfer of movement from the drive shaft to the driven shaft have to be maintained regularly due to large loads; hence the chains have to be regularly lubricated to ensure reliable performance and minimum wear. In practice, such maintenance is rarely executed, particularly during seasonal work in forests and fields.

The problem created in lubrication of sprockets and chains is that the machine has to be turned off, its protective cover has to be removed and a suitable place for delivering the lubricant onto chains has to be found, whereby the amount of lubricant has to be properly dosed. If the amount of lubricant is too high, its weight or inertion can disperse it onto other constructional elements, where lubrication is not needed or required, which may also lead to malfunction. In winches such element is the clutch - if even a small amount of lubricant fell onto the sliding surface of the cluth, the friction coefficient is immediately lowered and the clutch fails to transfer the required force and the winch does not work properly. In this case, clutch cleaning has to be performed, which is a costly and a time consuming process.

The invention is based on the problem of how to dose lubrication agents into chains, sprockets and sliding elements of forestry winches and other machines, where drive transfer is provided with a system of chains and sprockets. Due to a complex construction of transfer connections between sprockets and safety requirements, the chains are relatively inaccessible for lubrication agents and oils. In existing systems, approximately 30 minutes are needed to lubricate the chains, which is the reason why in practice lubrication is rarely performed. This in turn causes a decrease in the life span of the machine and technical problems due to chain weak occur more regularly. The aim of the invention is thus a constructional solution of an assembly for supply and dosage of lubrication agents to chains in forestry winches.

### State of the art

Presently known solutions for lubrication of chains in forestry winches and other forestry machines with chain drives required removal of the tractor drive and removal of the protective tin cover. Then, the lubricant had to be delivered with a stick, brush or a similar accessory to the drive system, which are in this case a chain and a sprocket. Due to optimization of space in such systems, the access to chains is hampered as there is not much room around the chain.

Slovenian patent 24406A describes a spiral channel for lubrication of bearings in a planetary gearbox, which allows improved oil supply to distant places. A steady flow of the oil through the channel requires a particular geometry of the channel, wherein the radius of the channel cross-section between 1 and 3 mm, the height of the spiral coils is between 3 and 6 mm, while the angle of the spiral is between 180 and 300 degrees. The quality of the channel is ensured with proper working with a planer or with a cutting machine.

Slovenian patent 25074A discloses a spiral channel for lubrication of sliding surfaces of bearings on semicircular bushes of conical teeth for driving a crane, the channel enabling a good supply of oil to inaccessible places. The cross-section of the spiral is elliptical. This solution allows suction in the spiral channel for supplying the lubrication agent to the semicircular sliding surfaces.

European patent EP0965016 B1 describes a device for lubrication of driving chains, in particular for motorcycles. The device comprises a system of brushes for cleaning and lubricating the chains, wherein the solution also includes draining channels.

The above-described solutions differ from the present invention in that lubrication is provided for bearings as well as the drive chain of motorcycles and not for the chain systems in forestry winches. There appear to be no solutions for lubricating chains in forestry winches and other working machines similar to the present invention.

### Description of the solution of the technical problem

The essence of the assembly for lubrication of chains for any working machine driven by an electric or a hydraulic drive is in that it includes at least one channel on the drive axle of a sprocket gear, so that the channel distributes a lubricant from a reservoir (lubrication device) to the circumference of at least one sprocket gear on which a chain is run, wherein the lubricant can spread along said channel. The assembly is preferably intended for installation into a forestry winch, however it can also be installed in any other forestry, agricultural or working machine, which uses chain based torque transfer.

The assembly for lubrication of chains for any working, agricultural or forestry machine, which includes a chain-enabled transfer of torque, the assembly comprising:
- a drive shaft with at least one longitudinal channel, preferably located in the middle of the said shaft,
- at least one sprocket gear, connected with the said shaft, wherein the sprocket gear has at least one transverse channel, preferably in the centre of the sprocket gear, and at least one exit opening, from which a lubricating agent (lubricant) can be delivered to a chain mounted on the said sprocket gear,
- a supply channel (tube) connected with the said longitudinal channel, via which the lubricating agent may be delivered into the longitudinal channel with a suitable element for pushing the lubricating agent into said channels.

The assembly may have more sprocket gears, preferably two, which are usually one smaller and one larger. Depending on the number of sprocket gears, the number of transverse channels is adapted. The shaft may have even two or more channels, which do not have to be in the middle of the shaft, but can be located in the interior of the shaft.

The assembly for lubrication of chains may have one-, two- or multiple-row sprocket gears, on which one-, two- or multiple-row chain is running, wherein the lubricant is delivered to the chain with the supply channel and above mentioned channels. A separate transverse channel is provided for each row of the sprocket gear, so the number of transverse channels is the same as the number of rows of the sprocket gear.

The assembly for lubrication of chains of forestry winches is preferably comprising a drive shaft with a large sprocket gear, a first bearing, a distancing bush, a second bearing inside a housing of a PTO shaft and a small sprocket gear, wherein the shaft is provided with at least one longitudinal channel and three transverse channels located in the centre of the large sprocket gear, the distancing bush and the small sprocket gear. In the centre of the large sprocket gear, the distancing bush and the small sprocket gear one transverse channel is provided, so that circular openings coincide with openings of the transverse channels. Above the distancing bush a connection for the lubricant supply tube is provided, wherein the preferred lubricant is grease.

The assembly for lubrication of chains for a forestry winch according to the invention will be described in further detail based on embodiments and figures, which show:
- Figure 1: assembly of sprockets and chains
- Figure 2: cross-section of the assembly of sprockets and chains
- Figure 3: explosion view of the assembly of sprockets and chains
- Figure 4: schematic view of the lubrication assembly
- Figure 5: schematic view of the assembly according to embodiment I
- Figure 6: schematic view of the assembly according to embodiment II
- Figure 7: schematic view of the assembly according to embodiment III
- Figure 8: schematic view of the assembly according to embodiment IV

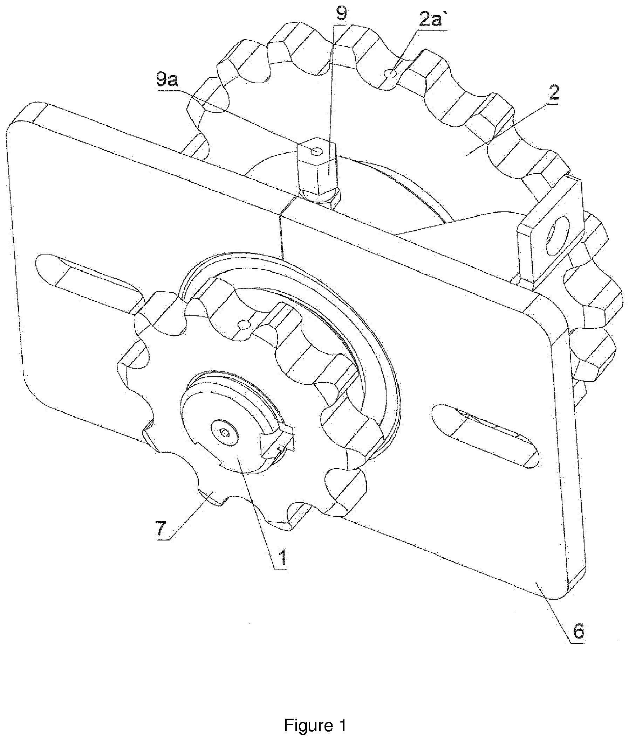

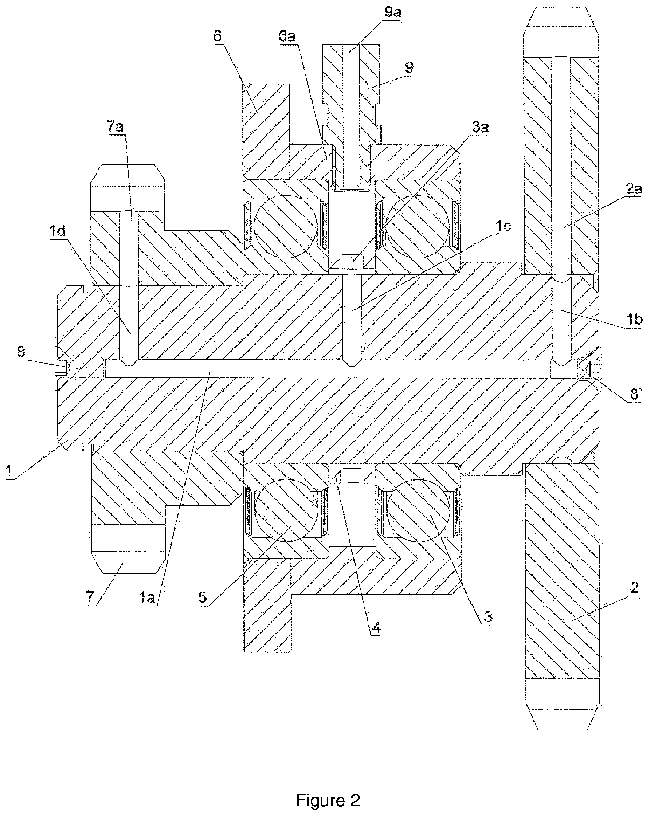

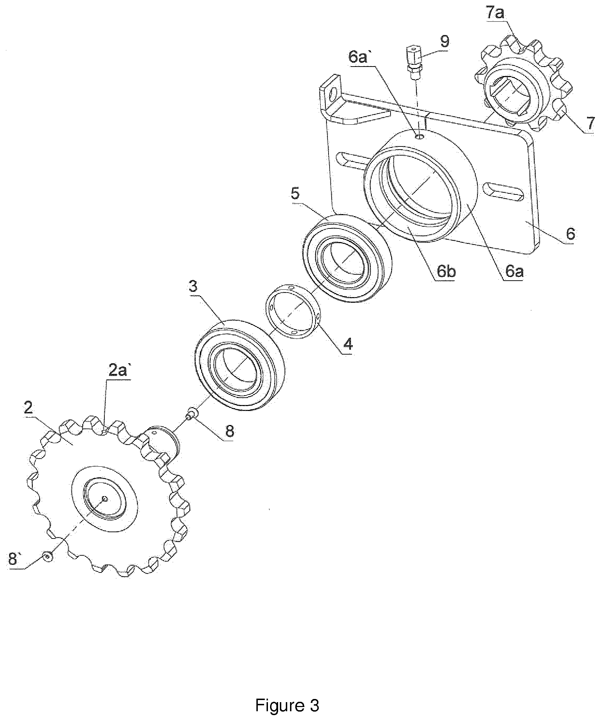

The assembly for lubrication of chains for a forestry winch according to a possible embodiment comprises: a drive shaft 1, on which a large sprocket gear 2, a first bearing 3, a distancing bush 4, a second bearing 5 inside a carrier 6 with a housing 6a and a small sprocket gear 7 are mounted. In the horizontal centre of the shaft 1 a longitudinal channel 1a is provided, which is on one end closed with a screw 8 and on the other end with a second screw 8'. The channel 1a may be closed on both ends with a screw or with any other suitable element such as a ball with a slightly larger diameter than the channel or a rivet. Perpendicularly to the longitudinal channel 1a a first transverse channel 2b is provided in the centre of the large sprocket gear 2, the transverse channel 2b continuing through the shaft 1 (inside the shaft it is marked with 1b). The carrier 6 has a convex housing 6a for installation of the bearing 3, the distancing bush 4 and the second bearing 5. A circular groove 6b is provided in the interior of the housing 6a having the width of the bush 4. Perpendicularly to the longitudinal channel 1a a second transverse channel 1c is provided in the vertical centre of the distancing bush 4, the second transverse channel 1c coincinding with one of the four channels 3a in the distancing bush 4 and the circular channel 6b of the housing 6a. The vertical centre of the second transverse channel 1c is a tube or a channel 9a of the connection 9, through which the lubricant is delivered, the lubricant preferably being a grease or oil. The connection 9 is screwed into a hole 6a' of the housing 6a. A third transverse channel 1d is provided in the centre of the small sprocket gear 7, the said channel coinciding with the channel 7a in the sprocket 7 (figures 1, 2 and 3).

The longitudinal channel in the drive shaft may be preferably closed on both sides with a screw or any other suitable element such as a ball having a larger diameter than the channel or a rivet.

The longitudinal channel in the drive shaft may also be made as a blind channel (closed on one end), wherein the blind end of the said channel may be in the area of the large or the small sprocket gear.

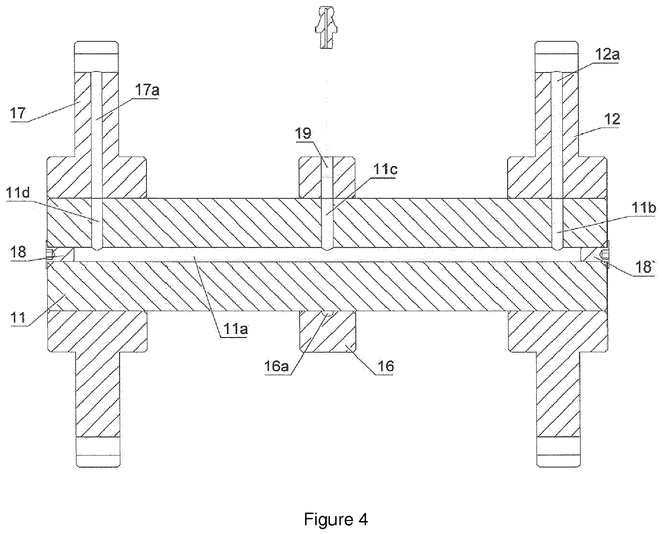

Figure 4 shows a schematic view of the assembly for lubrication according to the inventions, wherein on a drive shaft 11 a large sprocket gear 12, a housing 16 and a small sprocket gear 17 are mounted. In the horizontal centre of the shaft 11 a longitudinal channel 11a is provided, the said channel being closed on one end with a screw 18 and on the other end with a second screw 18'. Perpendicularly to the longitudinal channel 11a a first transverse channel 12a is made in the vertical centre of the large sprocket gear 12, the said channel 12a continuing into the shaft 11 with the channel 11b to the channel 11a. The housing 16 has in its vertical centre a second transverse channel 11c, which is perpendicular to the longitudinal channel 11a. In the vertical centre of the transverse channel 11c is a channel 16a for a connection 19, through which lubricant is delivered, the lubricant preferably being grease. In the centre of the small sprocket gear 17 a third transverse channel 11d is provided in the shaft 11. A flexible supply tube from the lubrication device M4 is connected to the channel 16a.

The longitudinal channel 11a may be a blind channel, wherein the blind end of the said channel 11a may be in the area of the large or the small sprocket gear.

The assembly for lubrication of chains according to the invention wherein the sprocket gear, a housing with a connection to a lubricating device, and the small sprocket gear are mounted on the drive shaft, the latter having in its horizontal centre a longitudinal channel, which is on both ends closed with a screw or any other suitable element. Perpendicularly to the longitudinal channel in the vertical centre of the large sprocket gear is a first transverse channel, in the vertical centre of the housing is a second transverse channel and in the vertical centre of the small sprocket gear is a third transverse channel. All three transverse channels coincide with the channels in the large sprocket gear, the housing and the small sprocket gear. Lubrication is performed so that through the connection to the lubricating device the lubricant is supplied to the longitudinal channel, from which the lubricant is lead via transverse channels to the circumference of the sprockets. Chains mounted on the sprockets are therefore in contact with the lubricant and are consequently lubricated.

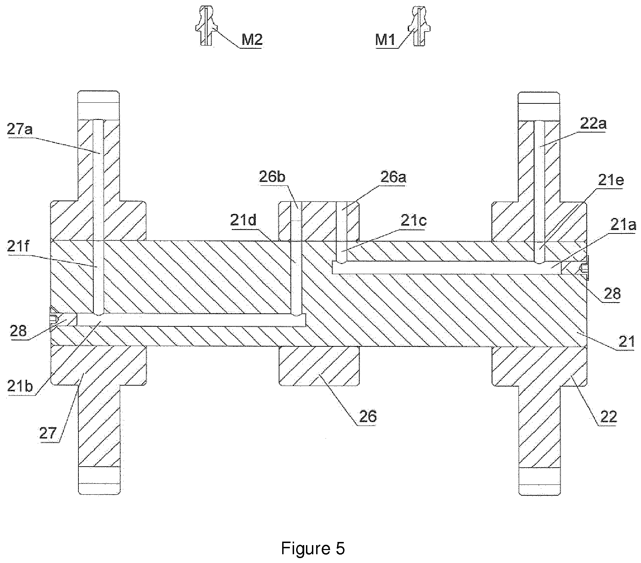

Figure 5 shows a schematic view of the assembly for lubrication of chains according to embodiment I, wherein a drive shaft 21 is provided with a large sprocket gear 22, a housing 26 and a small sprocket gear 27. Above the horizontal centre of the shaft 21 one longitudinal blind channel 21 is provided, said channel being closed on one end with a screw 28', while the blind part of the channel ends with a transverse channel 21c in the vertical centre of the shaft 21. Perpendicularly to the longitudinal channel 21a a first transverse channel 21e is provided in the shaft 21 in the centre of the large sprocket gear 22, the said channel 21e continuing in the sprocket gear 22 and is labelled with 22a. Under the horizontal centre of the shaft 21 on the other side is a second longitudinal blind channel 21b, wherein its outer end is closed with a screw 28, while a transverse channel 21d is provided at the blind end of the channel. Perpendicularly to the longitudinal channel 21b in the vertical centre of the small sprocket gear 27 is a first transverse channel 21f in the shaft 21.The said channel 21f continues into the sprocket gear 27 and has a reference number 27a. Channels 26a and 26b are provided in the housing 26 above channels 21 e and 23d, respectively. A flexible supply tube from the lubricating device M1 is connected to the channel 26a, while a second flexible tube from the second lubricating device M2 is connected to the channel 26b. In this case the assembly has two lubricating devices and separate lubrication of the small and the large sprocket gear.

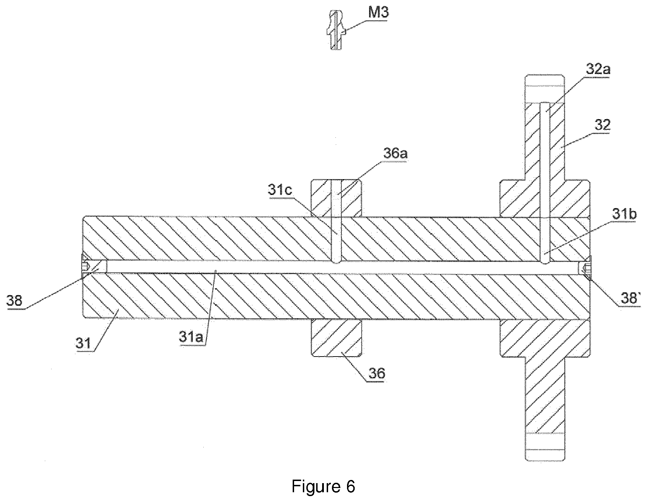

Figure 6 shows a schematic view of the assembly for lubrication of chains according to embodiment II, wherein a large sprocket gear 32 and a housing 36 are mounted on a drive shaft 31. In the horizontal centre of the shaft 31 a longitudinal channel 31a is provided, one end of which is closed with a screw 38 and the other end is closed with a second screw 38'. Perpendicularly to the longitudinal chanell 31a a transverse channel 31b is provided in the vertical centre of the large sprocket gear 32. A channel 32a is provided in the sprocket 32 above the channel 31b. Perpendicularly to the longitudinal channel 31a a transverse channel 36a is provided in the vertical centre of the housing 36. A flexible supply tube from a lubricating device M3 is connected to the channel 36a.

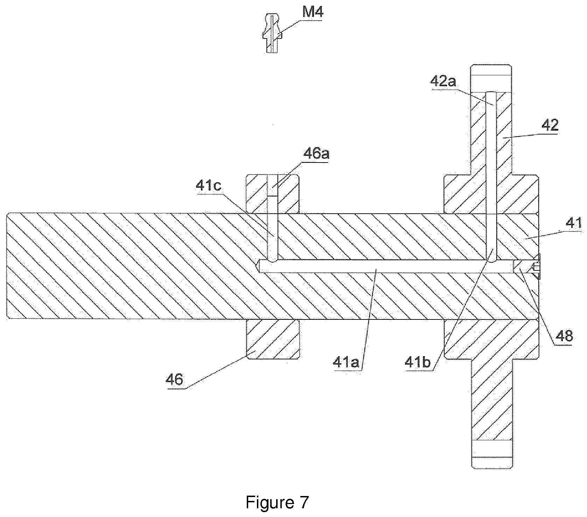

Figure 7 shows a schematic view of the assembly for lubrication of chains according to embodiment III, wherein the drive shaft 41 is provided with a large sprocket gear 42 and a housing 46. A blind channel 41a is provided in the horizontal centre of the shaft 41, which is on one end closed with a screw 48. Perpendicularly to the longitudinal channel 41a in the vertical centre of the large sprocket gear 42 a transverse channel 41b is made. Above the channel 41b is a channel 42a. Perpendicularly to the longitudinal channel 41a a transverse channel 46a is provided in the vertical centre of the housing 46. A flexible supply tube from a lubrication device M4 is connected into the channel 46a.

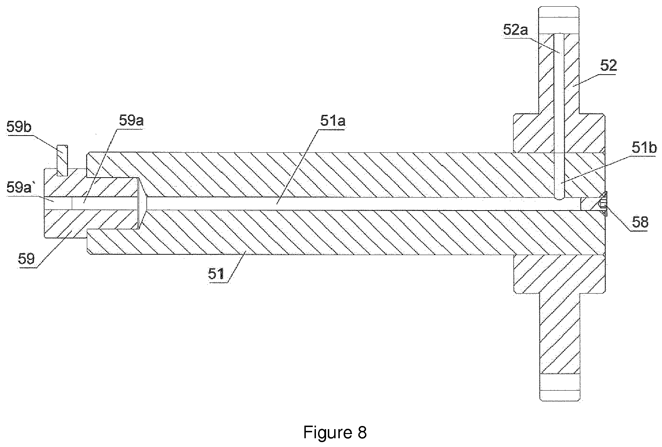

Figure 8 shows a schematic view of the assembly for lubrication of chains according to embodiment IV, wherein a sprocket gear 52 and a rotatable connection 59 are attached to a drive shaft 51. In the horizontal centre of the shaft 51 a longitudinal channel 51a is provided, which is closed on one end with a screw 58 and on the other end with the connection 59. The connection 59 has in its centre a channel 59a and on the outer side a holder 59b. The outer part 59a' of the channel 59a is acting as an inlet for a flexible tube of the lubricant supplying device. Perpendicularly to the longitudinal channel 51a a transverse channel 51b is provided in the vertical centre of the sprocket gear 52. The sprocket gear 52 is also provided with a channel 52a above the channel 51b.

A blind longitudinal channel 51a closed on the other end with the rotatable connection 59 may be provided in the horizontal centre of the shaft 51.

The method for lubrication of chains with the assembly according to the invention comprises at least the following steps:
- delivering a lubrication agent along the supply channel into at least one longitudinal channel on the drive shaft,
- dispersing the lubrication agent along at least one transverse channel to at least on sprocket gear, and
- lubricating the chain due to rotation of said sprocket gear in contact with the chain.

The steps of the method may be performed when needed or sporadically, depending on the use of the machine, chains of which have to be lubricated. Supply of the lubrication agent may be performed in any suitable way, with suitable dosing means, such as a pump or any other element for dosage and supply of lubricants.

The method for lubrication of chains on sprocket gears with the assembly according to the invention is carried out in the following way: the lubricant is pushed through the supply tube 9a of the connection 9 and the lubricant travels through the said tube, channel 3a of the distancing bush 3 and channel 1c of the shaft 1 to the channel 1a. From the channel 1a the lubricant travels to the transverse channel 1b and edge 2a' of the channel 2a on the circumference of the sprocket gear 2, thereby lubricating the chain mounted on the sprocket gear 2. On the other side, the lubricant travels to the transverse channel 1d and the edge 7a' of the channel 7a on the sprocket gear 7, thereby lubricating the chain mounted on the sprocket gear 7. In this way movement of the chain also delivers the lubricant to the contact surface, in this case between the chain and the sprocket gear, which is most prone to wear.

The above-described solutions enable simple, faster and more efficient lubrication of chains, which is initiated with a pump or with pressing of a button on the pump, which in turn triggers supply of the lubrication agent along the channels to the sprocket gears. The latter are lubricated and as the chains are in contact with said lubricated surfaces of sprocket gears, the chain automatically picks up the lubricant. Grease can be supplied with a lubricating device, connected to the lubrication assembly with a flexible or fixed tube and is located in an easily accessible place. The lubrication system delivers the lubricant to the desired place, where the lubricant can be reliably and evently spread onto the chain and the sprocket gears.

The assembly for lubrication of chains is suitable for use on one-row, two- or multiple row sprocket gear or chain tensioning device such as a sprocket, batten or any other element. The lubrication system may be installed in any working machine, which uses chain-based system for transfer of torque. Such machines are forestry winches and various agricultural machines, for example harvesters, balers and loading trailers.

The assembly for lubrication of chains according to the invention enables simple and fast lubrication, which can be performed without the need for turning off the machine, as the user can only press a button or a handle on a pump or any other delivery means in order to supply a lubricant to the channels and thus to the sprocket gears. The lubricant, which may be grease or oil, hence reaches the chains, which are moving on the circumference of said sprocket gears.

The assembly for lubrication also allows automatic lubrication, as it can be upgraded with a mechanism, pre-programmed for periodical supply of lubricants along the channels. The assembly may also have automatic supply means to achieve the same periodical supply of the lubricant into the supply channel or tube.

## Claims

1. An assembly for lubrication of chains for any working, agricultural or forestry machine, which includes a chain-enabled transfer of torque, wherein the assembly comprises:
- a drive shaft with at least one longitudinal channel, preferably located in the middle of the said shaft,
- at least one sprocket gear, connected with the said shaft, wherein the sprocket gear has at least one transverse channel, preferably in the middle of the sprocket gear, and at least one exit hole, from which the lubricating agent can be delivered to a chain mounted on the said sprocket gear,
- a supply channel connected with the said longitudinal channel, via which the lubricating agent may be delivered into the longitudinal channel with a suitable element for pushing the lubricating agent into said channels.

2. The assembly for lubrication of chains according to claim 1, **characterized in that** the assembly may have a two- or multiple row sprocket gear, on which one-, two- or multiple row chain is running; wherein a separate transverse channel is provided for each row of the sprocket gear.

3. The assembly for lubrication of chains according to claim 1 or claim 2, **characterized in that** the assembly instead of the sprocket gear is executed on a chain tensioning device, which may be a sprocket, a batten or any other machine element.

4. The assembly for lubrication of chains according to claim 1, claim 2 or claim 3, **characterized in that** the longitudinal channel in the drive shaft is made as a blind channel, and the blind part of the channel is in the area of the small or the large sprocket gear.

5. The assembly for lubrication of chains according to any of the preceding claims, **characterized in that** the longitudinal channel in the drive shaft is optionally closed on both ends with a screw or any other element such as a ball, which have a slightly larger diameter than the said channel or a rivet.

6. The assembly for lubrication of chains according to any of the preceding claims, **characterized in that** it is installed in any machine, which uses a chain system for transfer of rotation, preferably it is installed in a forestry winch.

7. The assembly for lubrication of chains according to any of the preceding claims, **characterized in that** a large sprocket gear (2), a first bearing (3), a distancing bush (4), a second bearing (5) inside a carrier (6) having a housing (6a) and a small sprocket gear (7) are mounted on a drive shaft (1); that in the horizontal centre of the said shaft (1) a longitudinal channel (1a) is provided, which is on one end closed with a screw (8) and on the other end with a second screw (8'); that perpendicularly to the longitudinal channel (1a) in the vertical centre of the large sprocket (2) a first transverse channel (1b) is provided; that the carrier (6) has a convex housing (6a) for mounting the bearing (3), the distancing bush (4) and the second bearing (5); that in the interior of the housing (6a) a circular groove (6b) in the width of the bush (4) is made; that perpendicularly to the longitudinal channel (1a) in the vertical centre of the distancing bush (4) a second transverse channel (1c) is provided, which coincides with one of the four channels (3a) in the distancing bush (4) and the circular groove (6b) of the housing (6a); that in the vertical centre of the transverse channel (1c) a tube (9a) of a connection (9) is provided, through which the lubricant is supplied; that the connection (9) is screwed into a hole (6a') of the housing (6a); that in the vertical centre of the small sprocket (7) a third transverse channel (1d) is provided in the shaft (1), the said channel (1d) coincinding with the channel (7a) in the small sprocket gear (7).

8. The assembly for lubrication of chains according to any of the claims from 1 to 6, **characterized in that** a large sprocket gear (22), a housing (26) and a small sprocket gear (27) are mounted on a drive shaft (21); that above the horizontal centre of the said shaft (21) a longitudinal blind channel (21a) is provided, which is on the outer end closed with a screw (28'), while the blind end ends with a transverse channel (21c); that perpendicularly to the longitudinal channel (21a) in the vertical centre of the large sprocket gear (22) a first transverse channel (21e) is provided; that above the channel (21e) in the sprocket gear (22) a further channel (22a) is provided; that above the horizontal centre of the shaft (21) a second longitudinal blind channel (21b) is provided, which is on its outer side closed with a screw (28), while its blind end ends with a transverse channel (21d); that perpendicularly to the longitudinal channel (21b) in the vertical centre of the small sprocket gear (27) a trasverse channel (21f) is provided; that above the channel (21f) in the small sprocket gear (27) a further channel (27a) is made; that in the housing (26) above the channels (21e and 21d) channels (26a and 26b) are provided, respectively; that a flexible supply tube of a first lubricating device (M1) is connected to the channel (26a) and a second flexible supply tube of a second lubricating device (M2) is connected to the channel (26b).

9. The assembly for lubrication of chains according to any of the claims from 1 to 6, **characterized in that** a large sprocket gear (32) and a housing (36) are mounted on a drive shaft (31); that in the centre of the said shaft (31) a longitudinal channel (31a) is provided, which is on one end closed with a screw (38) and on the other end with a second screw (38'); that perpendicularly to the longitudinal channel (31a) in the vertical centre of the large sprocket gear (32) a transverse channel (31b) is provided; that above the channel (31b) a further channel (32a) is provided in the sprocket gear (32); that perpendicularly to the longitudinal channel (31a) in the vertical centre of the housing (36) is a transverse channel (36a); that a flexible supply tube from a lubricating device (M3) is connected to the transverse channel (36a).

10. The assembly for lubrication of chains according to any of the claims from 1 to 6, **characterized in that** a large sprocket gear (42) and a housing (46) are mounted on a drive shaft (41); said shaft (41) is in its centre provided with a blind longitudinal channel (41a), which is on one end closed with a screw (48); that perpendicularly to the longitudinal channel (41a) in the vertical centre of the large sprocket gear (42) is a transverse channel (41b); that above the channel (41b) a further channel (42a) is provided in the sprocket gear (42); that perpendicularly to the longitudinal channel (41a) in the vertical centre of the housing (46) a transverse channel (46a) is provided; that a flexible supply tube from a lubricating device (M4) is connected to the channel (46a).

11. The assembly for lubrication of chains according to any of the claims from 1 to 6, **characterized in that** a large sprocket gear (52) and a rotatable connection (59) are mounted on a drive shaft (51); that in the horizontal centre of the shaft (51) a longitudinal channel (51a) is provided, the said channel (51a) being closed on one end with a first screw (58) and on the other end with the connection (59); that the connection (59) has in its centre a channel (59a) and on the outer side a holder (59b); that on the outer part (59a') of the channel (59a) is an entry spot for a flexible tube of a lubricating device; that perpendicularly to the longitudinal channel (51a) in the vertical centre of the sprocket gear (52) a transverse channel (51b) is provided; that above the channel (51b) a further channel (52a) is provided in the sprocket gear (52).

12. The assembly for lubrication of chains according to claim 11, **characterized in that** in the horizontal centre of the shaft (51) a blind longitudinal channel (51a) is provided, said channel being closed with a rotatable connection (59).

13. The assembly for lubrication of chains according to any of the preceding claims, **characterized in that** the lubrication agent is grease.

14. The assembly for lubrication of chains according to any of the preceding claims, **characterized in that** it is equipped with an automatic dosing apparatus for periodical supply of lubrication agents into the supply chain of the assembly.

15. A method for lubrication of chains with the assembly according to any claim from 1 to 14, **characterized in that**, the method comprises at least the following steps:
- delivering a lubrication agent along the supply channel into at least one longitudinal channel on the drive shaft,
- dispersing the lubrication agent along at least one transverse channel to at least one sprocket gear, and
- lubricating the chain due to rotation of said sprocket gear in contact with the chain.

16. A method for lubrication of chains with the assembly according to any claim from 1 to 14, **characterized in that** lubricant is pushed trough the supply channel (9a) of the connection (9); the lubricant travels through the tube, the channel (3a) of the bush (3) and the channel (1c) of the shaft (1) to the longitudinal channel (1a); that from the longitudinal channel (1a) the lubricant travels to the transverse channel (1b) and the edge (2a') of the channel (2a) on the circumference of the sprocket gear (2), thereby lubricating the chain mounted on the sprocket gear (2); that on the other side the lubricant travels to the second transverse channel (1d) and the edge (7a') of the channel (7a) on the second sprocket gear (7), thereby lubricating the second chain mounted on the second sprocket gear (7); that movement of the chain transfers the lubricant to the contact surface between the chains and the sprocket gears.
